# EUROPÄISCHE PATENTSCHRIFT

(11) **EP 0 861 578 B1**
(45) Veröffentlichungstag und Bekanntmachung des Hinweises auf die Patenterteilung: **04.10.2001**
(21) Anmeldenummer: 98101655.3
(22) Anmeldetag: 31.01.1998
(51) Int. Cl.: A01B 45/02

(54) **Bodenbearbeitungsmaschine, insbesondere zum Belüften von Rasenflächen**
Soil working machine, in particular for aerating lawn
Machine pour le travail du sol, en particulier pour aérer la pelouse

(30) Priorität: 05.02.1997 US 795093
(43) Veröffentlichungstag der Anmeldung: 02.09.1998
(73) Patentinhaber: DEERE & COMPANY, Moline, Illinois 61265-8098 (US)
(72) Erfinder: Merlin, Emmet Simon, Cascade, IA 52033 (US); Lamb, Mark Edward, Mayville, WI 53050 (US); Teiga, Michael Timothy, New Albany, OH 43054 (US)
(74) Vertreter: Magin, Ludwig Bernhard

(56) Entgegenhaltungen:
- US-A- 1 853 079
- US-A- 2 638 831
- US-A- 4 602 687

## Beschreibung

Die Erfindung bezieht sich auf eine Bodenbearbeitungsmaschine, insbesondere zum Belüften von Rasenflächen, mit an einem Stellmechanismus angeordneten Zinken, die während ihres Arbeitseinsatzes über eine Kraftquelle zum Einstechen in den Boden mit einer ersten Geschwindigkeit auf- und abbewegbar sind, wobei der Stellmechanismus zwischen einer Arbeits- und einer Transportstellung verstellbar ist.

Auf Sportplätzen, insbesondere auf Golfplätzen aber auch in Park- oder parkähnlichen Anlagen spielt der Rasenzustand stets eine bedeutende Rolle. Eine dichte und gesunde Grasnarbe ist ein Garant für einen guten Rasenzustand, der bekanntlich durch Verfilzungen und Verdichtungen beeinträchtigt wird, was das Eindringen von Wasser, Nährstoffen und Dünger erschwert. Abhilfe kann hier durch eine gute Belüftung geschaffen werden, wozu in den Boden Belüftungslöcher eingebracht werden, beispielsweise durch Ausstechen. Die hierzu erforderlichen Bodenbearbeitungsmaschinen werden auch als Aerator oder Aerifizierer oder ähnlich bezeichnet.

Bei der bekannten Bodenbearbeitungsmaschine, von der die Erfindung ausgeht (US-A-2 638 831), erfolgt das "Aerifizieren" durch jeweils zwei Zinkenpaare, deren Rammstangen an einer vertikalen Schwenkwelle und zu beiden Seiten dieser Schwenkwelle angebracht sind. Die Bodenbearbeitungsmaschine wird von Hand geführt und der Vorwärtsantrieb erfolgt über einen Reibschluss, da von der Kraftquelle angetriebene Rollen auf der Lauffläche von Antriebsrädern aufliegen. Bei einer Verstellung der Arbeitswerkzeuge in die Transportstellung ist der Reibschluss aufgehoben. Der Lochabstand lässt sich dadurch variieren, dass die Bedienungsperson die Maschine zurückhält oder schiebt, also die Fahrgeschwindigkeit ändert.

Bei moderneren Aerifizierern (US-A-4 753 298) erfolgt der Antrieb der Räder über einen Hydromotor und einen Kettentrieb. Die den Hydromotor antreibende Pumpe dient auch zum Beaufschlagen von Hubzylindern, die die Arbeitswerkzeuge zwischen ihren Arbeits- und Transportstellungen verstellen. Damit die Arbeitswerkzeuge in ihrer Arbeitsstellung in den Boden einstechen können, ist ein Verbrennungsmotor vorgesehen.

Allen derartigen Geräten ist gemeinsam, dass bei Erreichen der zu aerifizierenden Fläche die Bedienungsperson die Arbeitswerkzeuge beispielsweise durch Verstellen eines entsprechenden Steuerhebels aus der Transportstellung, in der auch angetriebene Arbeitswerkzeuge die Grasnarbe nicht erreichen können, in die Arbeitsstellung absenkt. Spätestens irgendwann vor Erreichen der Arbeitsstellung wird der Antrieb für die Arbeitswerkzeuge automatisch zugeschaltet, sofern er in der Transportstellung automatisch abgeschaltet wurde. Bei angetriebenen Arbeitswerkzeugen führen diese aber bei Erreichen der zu aerifizierenden Fläche eine Auf- und Abbewegung aus und treten dann bei Vorwärtsfahrt der Maschine unterschiedlich tief in den Boden ein. In der Regel werden sie zu dieser Zeit auch noch nicht so geführt, dass sie saubere Löcher stechen können. Vielmehr kratzen sie über die Grasnarbe oder beschädigen diese sonst wie.

Die Erfindung schafft hier Abhilfe, indem sie die Kraftquelle steuernde Mittel zum automatischen Herabsetzen der ersten Geschwindigkeit auf eine geringere Geschwindigkeit während der Verstellung des Stellmechanismus zwischen seiner Transport- und Arbeitsstellung vorsieht. Auf diese Weise wird die Eintrittsgeschwindigkeit der Zinken in den Boden und andererseits auch die Austrittsgeschwindigkeit aus den Boden verringert. Als Folge ergeben sich keine oder nur geringe Grasnarbenschäden.

Ferner kann nach der Erfindung noch vorgesehen sein, dass in dieser Zeit die Fahrgeschwindigkeit der Maschine automatisch herabgesetzt wird. Dies kann in einfacher Weise dadurch erfolgen, dass die Kraftquelle auch zum Antrieb der Bodenbearbeitungsmaschine dient.

Schließlich können die die Kraftquelle steuernden Mittel ein Solenoid und einen Regler mit einem Reglerarm für die Kraftquelle aufweisen, wobei das Solenoid über einen verstellbaren Stößel mit dem Reglerarm verbunden und bei einer Verstellung eines Steuerschalters auf Heben und / oder Senken zum Verstellen des Stellmechanismus zwischen seiner Transport- oder Arbeitsstellung erregt ist und den Reglerarm betätigt, wodurch wiederum die Motordrehzahl herabgesetzt wird und damit auch die Fahrgeschwindigkeit und die Antriebsgeschwindigkeit der Arbeitswerkzeuge. Dies ist besonders einfach, wenn die Arbeitswerkzeuge von einem Kurbelrad aus angetrieben werden, wobei dann an dem Kurbelrad eine Rammstange angelenkt ist, an deren unteren Ende jeweils ein Zinken fest angeordnet ist. Damit nun ein sauberes Loch gestochen werden kann, ist jeder Zinken noch über eine Dämpfeinrichtung mit dem Rahmen der Bodenbearbeitungsmaschine verbunden.

In der Zeichnung ist ein nachfolgend näher erläutertes Ausführungsbeispiel der Erfindung dargestellt. Es zeigt:
- Fig. 1:: das Arbeitswerkzeug einer als Aerator ausgebildeten Bodenbearbeitungsmaschine mit einer Antriebsteuerung und
- Fig. 2: einen Schaltkreis für eine Arbeitswerkzeugsteuerung.

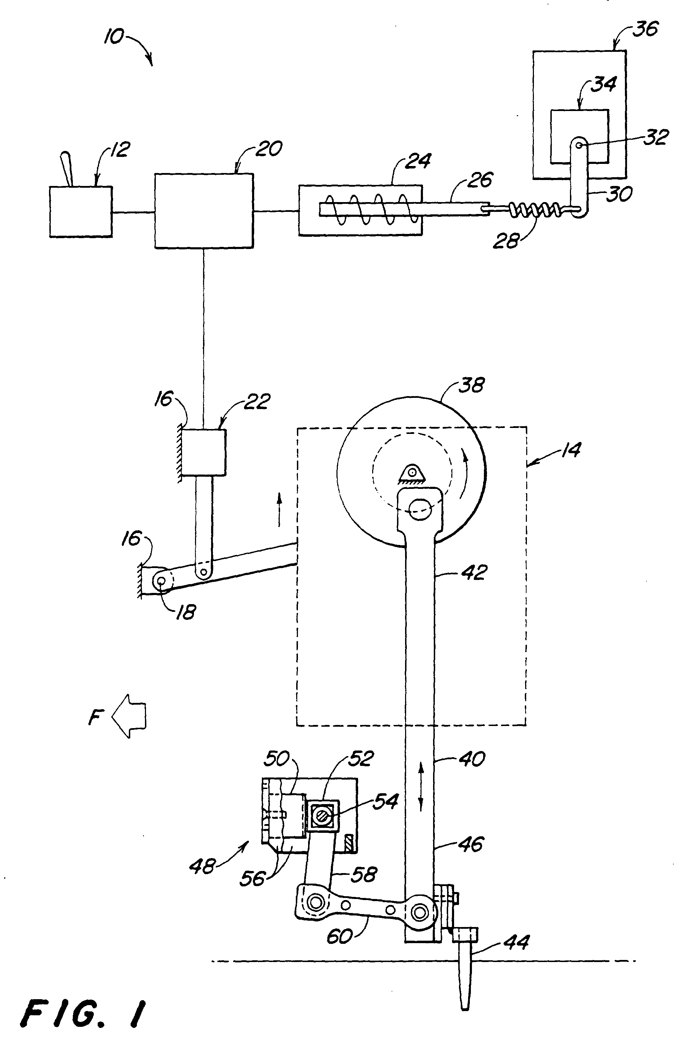

In Fig. 1 der Zeichnung ist ein Steuermechanismus 10 für einen selbstfahrenden Aerator wiedergegeben. Man erkennt einen Elektro- oder Hubschalter 12, der an dem Bedienungsstand des Aerators angebracht ist. Damit kann der Hubschalter von einer Bedienungsperson während des Einsatzes leicht betätigt werden, um den Stellmechanismus 14 bzw. die Arbeitswerkzeuge des Aerators zwischen der Transport- und der Arbeitsstellung zu verstellen. Der Stellmechanismus 14 ist an einem Rahmen 16 derart angeschlossen, dass er um eine Querachse 18 verschwenken kann, wenn er zwischen seiner Transport- und Arbeitsstellung oder umgekehrt verschwenkt wird. Im einzelnen aktiviert bei einer Verstellung des Hubschalters 12 in seine Schaltstellung ein an dem Schalter 12 angeschlossenes elektronisches System 20 einen linearen Antriebmechanismus 22. Der lineare Antrieb ist an dem Stellmechanismus 14 angeschlossen und verstellt zusammen mit dem elektronischen System 20 und den Hubschalter 12 den Stellmechanismus des Aerators zwischen seiner hochgeschwenkten und heruntergeschwenkten Stellung.

Bei dem bevorzugten Ausführungsbeispiel ist außerdem noch eine Steuerung für eine Kraftquelle vorgesehen. Zu dieser Steuerung gehört ein Solenoid 24, das mit dem elektronischen System 20 vernetzt ist und erregt wird, wenn der lineare Antrieb 22 den Stellmechanismus des Aerators zwischen seinen Positionen verstellt. Im erregten Zustand bewirkt das Solenoid 24, dass ein Stößel 26 aus seiner in Fig. 1 gezeigten Stellung nach links verstellt wird. Durch die Verstellung des Stößels nach links wird eine Feder 28 gespannt und letztlich ein Reglerarm 30. Der Reglerarm wiederum sitzt auf einer Reglerwelle 32 auf, die zu einem Motorregler 34 gehört. Der Regler 34 wiederum ist an einem Motor 36 angeschlossen und verhindert, dass der Motor 36 mit einer unerwünscht hohen Umdrehungszahl arbeitet. Wenn nun der Reglerarm 30 aus seiner Stellung in Fig. 1 nach links oder im Uhrzeigersinn verstellt wird, wird auch die Reglerwelle mitverstellt, wodurch über den Regler die Umdrehungen des Motors heruntergesetzt werden. Damit wirken das Solenoid 24, der Stößel 26, die Feder 28, der Reglerarm 30 und der Regler 34 als eine Steuerung für den Motor oder die Kraftquelle, wodurch die Drehzahl des Motors automatisch herabgesetzt wird, wenn der Stellmechanismus des Aerators zwischen seiner Transport- und Arbeitsstellung oder umgekehrt verstellt wird.

Aus Fig. 1 ist weiterhin erkennbar, dass der Stellmechanismus 14 ein Kurbelrad 38, das von dem Motor 36 aus angetrieben wird und eine Rammstange 40 aufweist, deren oberes Ende 42 an die Antriebskurbel schwenkbar angeschlossen ist. Ein Ausstechwerkzeug in Form eines Zinkens 44 ist mit dem unteren Ende 46 der Rammstange 40 fest verbunden. Eine Dämpfeinrichtung 48 dient im wesentlichen dazu, dass der Zinken 44 mit dem unteren Ende 46 der Rammstange 40 leichte Ausweichbewegungen ausführen kann, wenn beim Arbeitseinsatz Kräfte durch das Ein- und Ausstechen auf den Zinken einwirken. Die Dämpfeinrichtung 48 ist durch ein Gummilager 50 geprägt, das an dem Fahrzeugrahmen 16 befestigt ist. Ein rechteckiger Hohlteil 52 ist mit dem Gummilager 50 fest verbunden. Ein Schraubenbolzen 54, der sich durch zwei zueinander seitlichen Abstand aufweisende Platten 56 erstreckt, bildet die Schwenkachse für einen ersten Stellhebel 58, der an dem Hohlteil 52 angeschlossen ist. Der erste Stellhebel 58 ist an einen zweiten Stellhebel 60 angelenkt, der wiederum an das untere Ende der Rammstange 40 gelenkig angeschlossen ist, und zwar im Bereich des Zinkens 44. Wenn der Zinken beim Eindringen in den Boden nun auf Gegenkräfte trifft, wird das Gummilager 50 sich entsprechend biegen und eine geringfügige Bewegung des Zinkens als Antwort auf die Kraft zulassen. Andererseits arbeitet das Gummilager 50 als Feder, damit der Zinken 44 in seine richtige Position zurückgeführt wird, nachdem er durch das sich drehende Kurbelrad 38 aus dem Boden gezogen wurde. Über das Gummilager wird damit der Zinken 44 richtig positioniert, um wieder in einem sachgemäßen Winkel in den Boden einzustechen.

Durch das Herabsetzen der Drehzahl des Motors während des Anhebens oder Absenkens des Stellmechanismus 14 des Aerators wird die Bodenoberfläche in dieser Übergangsperiode geschont, da die Zinken dadurch die Rasenoberfläche nicht oder höchstens unwesentlich beschädigen. Im einzelnen wird die Motordrehzahl von etwa 3 000 U/min auf etwa 2 400 U/min herabgesetzt. Da das Kurbelrad 38 von dem Motor aus angetrieben wird, wird die Drehzahl des Kurbelrades von etwa 600 U/min auf etwa 450 U/min herabgesetzt. Damit wird letztlich die Geschwindigkeit, mit der der oder die Zinken in den Boden eintreten oder aus ihn austreten, während des Anhebens oder Absenkens des Stellmechanismus des Aerators gesteuert. Bei einem Herabsetzten der Motordrehzahl wird selbstverständlich auch die Fahrgeschwindigkeit des Aerators herabgesetzt, so dass auch die Fahrgeschwindigkeit während des Anhebens oder Absenkens des Stellmechanismus gesteuert wird. Diese Steuerungsmöglichkeiten erweisen sich als besonders vorteilhaft, wenn sie an Aeratoren eingesetzt werden, deren Zinken infolge der Dämpfeinrichtung leichte Schwingbewegungen ausführen können. Aber auch an Aeratoren, bei denen dies nicht der Fall ist, lassen sich diese Steuerungen vorteilhaft verwenden.

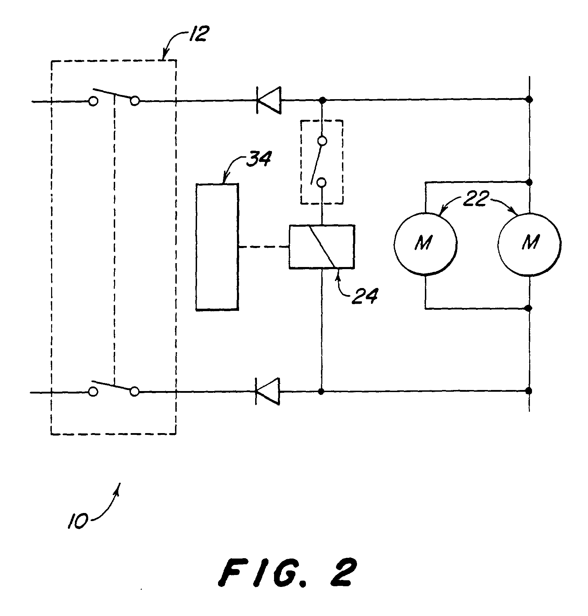

In Fig. 2 ist ein Schemadiagramm für einen elektrischen Kreis dargestellt, der den Steuerschalter 12, das elektrische System 20, das Solenoid 24 und die linearen Antriebe 22 miteinander verknüpft. Wenn die Bedienungsperson den Steuerschalter 12 betätigt, wird ein elektrischer Kreis geschlossen und das Solenoid 24 und die dazu parallel geschalteten Antriebe 22 werden mit Strom versorgt. Nicht dargestellte Hubbegrenzer, wie herkömmliche Reedschalter, sind an dem Stellmechanismus 14 vorgesehen und sprechen auf die Bewegung des Stellmechanismus zwischen seiner Transportstellung und seiner Arbeitsstellung an. Diese Hubbegrenzer sind in dem elektrischen Kreis nach Fig. 2 vorgesehen und stoppen die Antriebe 22, wenn der Stellmechanismus 14 seine höchste und seine niedrigste Stellung erreicht.

Bei dem bevorzugten Ausführungsbeispiel ist ein Solenoid 24 mit einem elektrischen System 20 verbunden. Stattdessen kann auch eine mechanische Einrichtung Verwendung finden. Bei einem elektrischen Regler kann dessen Steuerung auch durch einen elektrischen Kreis erfolgen.

Anstelle der linearen Antriebe können auch andere Antriebe, wie Hydraulikzylinder eingesetzt werden.

## Patentansprüche

1. Bodenbearbeitungsmaschine, insbesondere zum Belüften von Rasenflächen, mit an einem Stellmechanismus (14) angeordneten Zinken (44), die während ihres Arbeitseinsatzes über eine Kraftquelle (36) zum Einstechen in den Boden mit einer ersten Geschwindigkeit auf- und abbewegbar sind, wobei der Stellmechanismus (14) zwischen einer Arbeits- und einer Transportstellung verstellbar ist, **gekennzeichnet durch** die Kraftquelle (36) steuernde Mittel zum automatischen Herabsetzen der ersten Geschwindigkeit **auf eine geringere Geschwindigkeit** während der Verstellung des Stellmechanismus (14) zwischen seiner Transport- und Arbeitsstellung.

2. Bodenbearbeitungsmaschine nach Anspruch 1, wobei die Kraftquelle als Motor (36) ausgebildet ist, **dadurch gekennzeichnet, dass** der Motor (36) die Bodenbearbeitungsmaschine antreibt.

3. Bodenbearbeitungsmaschine nach Anspruch 1 und /oder 2, **dadurch gekennzeichnet, dass** die die Kraftquelle steuernden Mittel ein Solenoid (24) und einen Regler (34) mit einem Reglerarm (30) für die Kraftquelle aufweisen, wobei das Solenoid (24) über einen verstellbaren Stößel (26) mit dem Reglerarm (30) verbunden und bei einer Verstellung eines Steuerschalters (12) auf Heben und / oder Senken zum Verstellen des Stellmechanismus (14) zwischen seiner Transport- oder Arbeitsstellung erregt ist und den Reglerarm (30) betätigt.

4. Bodenbearbeitungsmaschine nach einem oder mehreren der vorstehenden Ansprüche, **dadurch gekennzeichnet, dass** jeder Zinken (44) an einer Rammstange (40) angeschlossen ist, die an einem von der Kraftquelle (36) aus antreibbaren Kurbelrad (38) angelenkt ist, wobei jeder Zinken (44) über eine Dämpfeinrichtung (48) mit dem Rahmen der Bodenbearbeitungsmaschine verbunden ist.

## Claims

1. A ground working machine, especially for aerating lawn areas, with tines (44) which are arranged on an actuating mechanism (14) and can be moved up and down at a first speed during operation, by means of a power source (36), for sticking into the ground, wherein the actuating mechanism (14) can be adjusted between a working position and a transport position, **characterized by** means controlling the power source (36) for automatically reducing the first speed to a smaller speed during the adjustment of the actuating mechanism (14) between its transport and working positions.

2. A ground working machine according to claim 1, wherein the power source is in the form of an engine (36), **characterized in that** the engine (36) propels the ground working machine.

3. A ground working machine according to claim I and/or 2, **characterized in that** the means controlling the power source comprise a solenoid (24) and a governor (34) with a governor arm (30) for the power source, wherein the solenoid (24) is coupled through a movable plunger (26) to the governor arm (30) and is energised during setting of a control switch (12) to raising and/or lowering for shifting the actuating mechanism (14) between its transport and working positions and actuates the governor arm (30).

4. A ground working machine according to one or more of the preceding claims, **characterized in that** each tine (44) is attached to a ram link (40), which is coupled to a crank wheel (38) drivable by the power source (36), wherein each of the tines (44) is connected to the frame of the ground working machine through a damping device (48).

## Revendications

1. Machine de travail du sol, notamment pour aérer des surfaces de pelouse, comportant des dents (44), qui sont disposées sur un mécanisme de réglage (14) et qui, pendant leur utilisation pour le travail, peuvent être soulevées et abaissées à une première vitesse, par l'intermédiaire d'une source de force (36), pour leur enfichage dans le sol, le mécanisme de réglage (14) étant réglable entre une position de travail et une position de transport, **caractérisée en ce qu'**elle comporte des moyens qui commandent la source de force (36) et qui servent à réduire automatiquement la première vitesse à une vitesse plus faible pendant le déplacement du mécanisme de réglage (14) entre sa position de transport et sa position de travail.

2. Machine de travail du sol selon la revendication 1, dans laquelle la source de force est agencée sous la forme d'un moteur (36), **caractérisée en ce que** le moteur (36) entraîne la machine de travail du sol.

3. Machine de travail du sol selon la revendication 1 et/ou 2, **caractérisée en ce que** les moyens commandant la source de force comprennent un électroaimant (24) et un régulateur (34) comportant un bras de régulation (30) pour la source de force, l'électroaimant (24') étant relié au bras (30) du régulateur par l'intermédiaire d'un poussoir réglable (26) et étant excité, lors d'un réglage du commutateur de commande (12) sur un soulèvement et/ou sur un abaissement, pour déplacer le mécanisme de réglage (14) entre sa position de transport et sa position de travail, et actionne le bras (30) du régulateur.

4. Machine de travail du sol selon une ou plusieurs des revendications précédentes, **caractérisée en ce que** chaque dent (44) est raccordée à une bielle (40) qui est articulée sur une roue de manivelle (38), qui peut être entraînée à partir de la source de force (36), chaque dent (44) étant reliée par l'intermédiaire d'un dispositif d'amortissement (48) au châssis de la machine de travail du sol.
